(19)

**Europäisches Patentamt**
**European Patent Office**
**Office européen des brevets**

(11) **EP 1 555 769 B1**

(12) **EUROPEAN PATENT SPECIFICATION**

(45) Date of publication and mention
of the grant of the patent:
**22.02.2017 Bulletin 2017/08**

(51) Int Cl.:
**H04B 7/155** (2006.01)  **H04L 27/26** (2006.01)
**H04L 25/03** (2006.01)

(21) Application number: **04030613.6**

(22) Date of filing: **23.12.2004**

(54) **Flat spectrum signal processing system**

Signalverarbeitungssystem für ein flaches Spektrum

Système de traitement de la signalisation de spectre plat

(84) Designated Contracting States:
**AT BE BG CH CY CZ DE DK EE ES FI FR GB GR HU IE IS IT LI LT LU MC NL PL PT RO SE SI SK TR**

(30) Priority: **23.12.2003 ES 200400002**

(43) Date of publication of application:
**20.07.2005 Bulletin 2005/29**

(73) Proprietor: **Tredess 2010, S.L.**
**15700 Santiago de Compostela (ES)**

(72) Inventors:
 • **Pieto Davila, Alberto**
 **15700 Santiago de Compostela (ES)**

 • **Mosquera Nartallo, Carlos**
 **15700 Santiago de Compostela (ES)**
 • **Lopez Valcarce, Roberto**
 **15700 Santiago de Compostela (ES)**
 • **Pérez Gonzales, Fernando**
 **15700 Santiago de Compostela (ES)**

(74) Representative: **Dosterschill, Peter**
**Dosterschill & Kollegen**
**Fichtenstrasse 11**
**85570 Ottenhofen (DE)**

(56) References cited:
**EP-A2- 0 772 310      DE-A1- 10 155 179**
**JP-A- 2000 031 877    JP-A- 2002 330 112**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a flat spectrum signal processing system according to claim 1.

An example of flat spectrum signals are comprised, amongst others, of signals with COFDM modulation.

COFDM (Coded Orthogonal Frequency Division Multiplexing) modulation systems have reached high levels of popularity due, amongst other factors, to their robustness in multipath environments such as terrestrial links by radio.

A COFDM signal can be seen as an array of carriers modulated by complex signals. Said carriers can be easily differentiated from one another, due to there being orthogonality between them.

One of the characteristics of systems which use COFDM modulation, such as digital terrestrial television, is that single frequency networks can be formed, i.e. it is not necessary to perform frequency planning as occurs, for example, with conventional systems of analog television broadcasting, which require the signals between successive repeaters to be repeated, so as to avoid interference. Said interference would be caused by the signals emitted by the different transmitters or repeaters at the same frequency, and which may be captured by the same receiver, which should process several copies of the same signal with different levels and delays.

COFDM modulation permits incorporating all those copies with certain restrictions without the system stopping functioning.

All the alterations that a COFDM signal undergoes, from when it is transmitted to when it is received, negatively affect the final reception, increasing the probability of errors, a large part of these distortions being reflected in the signal spectrum which loses its more or less flat appearance. So, if the signal goes from one point to another following two different paths, i.e. it traverses a multipath channel, maximum and minimum values may appear in the spectrum on whose levels will it will depend in addition to the relative levels between both signals received.

One of the problems associated with isofrequency repeaters is the feedback which is produced from the output to the input thereof, which gives rise to a closed-loop, system which also causes the spectrum to no longer be flat and obliges the reduction in the repeaters' gain when the attenuation or blocking between the input and output does not reach the sufficient level.

This feedback problem, which occurs from the output to the input of the isofrequency repeaters, has been dealt with in various documents, such as patent documents EP 0772310 and ES 216008.

Said patents attempt to exclusively compensate the repeaters' feedback but do not take into account all the alterations a COFDM signal undergoes from when it is transmitted to when it is received.

DE 101 55 179 A1 discloses a repeater with digital signal processing device for band pass filtering or for suppressing oscillation of the repeater which includes an adaptive complex filter, a quadrature modulator and a plurality of further components.

JP 2002 330112 A discloses an OFDM Digital Signal Repeater whereby a receiving section converts a receiving signal into a base band digital signal, performs quadrature detection and discrete Fourier-transform, and outputs carrier data of an ODDM wave. A local signal for this frequency conversion is fed by a synchronous circuit section. In a repeating process section, an equalizing circuit equalizes input carrier data, a discrimination circuit discriminates the values of incoming data, and a pilot insertion circuit newly inserts a previously prepared correct pilot into the carrier data. A transmission section performs inverse discrete Courier-transform and quadrature modulation on the carrier data that the correct pilot is newly inserted into, converts the data into an OFDM signal of a desired frequency, and then sends the signal.

JP 2000 031877 A discloses a mobile communication system, whereby a repeater station receives signals transmitted by a base station by a frequency fA-BS allocated to the base station, converts them to signals of a frequency different from the frequency fA-BS and transmits them to a mobile station by base station stipulated transmission power or mobile station stipulated transmission power. A relay mark information REP is added to the signals transmitted by the repeater station and relay mark information MS is added to the transmission signals of the mobile station communicating with the repeater station.

The object of the present invention is the embodiment of a flat spectrum signal processing system which permits equalizing the signal spectrum and, in this way, corrects the magnitude distortions that the signal undergoes in the system.

Said objective is achieved with a flat spectrum signal processing system such as that defined in the claims.

The invention is applied to the processing of signals to compensate the magnitude distortions which a flat spectrum signal (e.g. COFDM signals) undergoes from when it is transmitted until reaching the receiver.

The invention is based on the fact that the signal spectrum is flat in the passband (e.g. COFDM signals) and that the linear distortions the signal undergoes when it is transmitted are reflected in said spectrum, so the flat spectrum signal processing system of the invention flattens the signal spectrum allowing the signal distortions to be corrected.

An example of a flat spectrum signal processing system according to the invention comprises a first frequency converter, which changes a first signal frequency to a second frequency, an analog/digital converter, which converts an analog signal to a digital signal, a filter, which is digital and adaptive, a second digital/analog converter, which converts the digital signal to an analog signal, and a second frequency converter, which returns the analog signal to the first frequency. The filter has a transfer function

$$H(z) = \frac{b}{1 + \sum_{k=1}^{N} a_k z^{-k}}$$

wherein H(z) represents the ratio between the filter output (n) and the filter input (n) by means of the difference equation.

$$\text{Output } [n] = b * \text{input } [n] - \sum_{k=1}^{N} a_k * \text{output}[n-k]$$

wherein

a    is a coefficient designating the elimination of distortions present in the signal;
b    is a coefficient designating the adjustment of the gain of the flat spectrum signal processing system and
z    is a variable parameter, in particular gain, loss or attenuation of the filter,

whereby the filter is an unstable filter.

The system according to the invention has the advantage of permitting better reception of the signal, avoiding both the interference produced by feedback effects and by multipath effects. Furthermore, correcting the distortions before the signal reaches the receiver may provide gain to the system, i.e. offer greater coverage for the same power transmitted or, equivalently, reduce the power necessary to maintain the same level of coverage.

In another example according to the invention, the flat spectrum signal processing system is characterized in that the second adaptive digital filter is an infinite impulse response filter.

This has the advantage of permitting a reduction in the number of necessary coefficients of the filter convergence algorithm which appreciably reduces the system implementation cost.

In another example of flat spectrum signal processing system according to the invention, the second adaptive digital filter is implemented with a lattice structure. This has the advantage of permitting greater simplicity of implementation.

Another example of flat spectrum signal processing system according to the invention is characterized in that the second adaptive digital filter has coefficients which adapt to the pseudolinear regression approach algorithm and/or to its variants based on signum functions.

This has the advantage of using a computationally simple algorithm which, at the same time, has good convergence properties.

In another example of flat spectrum signal processing system according to the invention, the second adaptive digital filter which adaptively flattens the signal spectrum acts on the signal samples in intermediate processing frequency.

This has the advantage of allowing the system complexity to be reduced.

In another example according to the invention, the flat spectrum signal processing system is characterized in that only one of each M coefficients of the second adaptive digital filter is other than zero, with M being a whole number or equal to two.

In another example, the flat spectrum signal processing system according to the invention is characterized in that coefficient adaptation is performed from one of each M samples of the output signal. With M being a whole number greater than or equal to two.

In another example according to the invention, a telecommunications repeater, in particular of digital television signals, formed by at least one receiving antenna and a transmitting antenna, a channel filter, a mixer, a local oscillator, a surface wave filter, IF amplifiers, a detector, an attenuator, a mixer, a local oscillator, a channel filter and an output amplifier, is characterized in that it incorporates a flat spectrum signal processing system according to the invention.

This has the advantage of having a repeater which corrects the distortions which the signal undergoes between the transmitter-repeater and repeater-receiver path caused by the multipath, as well as those caused in the repeater due to the feedback.

In a non-limiting example of flat spectrum signal processing system according to that of the invention, this is applied to the signal processing necessary to compensate the magnitude distortions which a COFDM signal undergoes from when it is transmitted until it reaches the receiver. To do this, the signal spectrum should be kept as flat as possible in the passband so that the receiver can operate in the best possible conditions.

Said distortions are introduced through the propagation channel and the possible amplifying elements the signal may encounter in its path, such as repeaters (also known as Gap- Filler).

The invention is based on the fact that the signal spectrum is flat in the passband and that the linear distortions the signal undergoes from when it is transmitted are reflected in said spectrum, the flat spectrum signal processing system of the invention thus flattening the signal spectrum permitting the signal distortions to be corrected.

A non-limiting example of a possible embodiment of a flat spectrum signal processing system according to that of the invention is disclosed with reference to the attached figures.

Figure 1 shows a simplified form of the path the COFDM signal follows.

Figure 2 shows a block diagram of a repeater (or Gap-Filler)

Figure 3 shows a diagram of the flat spectrum signal processing system according to the invention.

Figure 4 shows a block diagram of the second adaptive digital filter.

Figure 5 shows the digital filtering element.

Figure 6 shows the coefficient adaptation element.

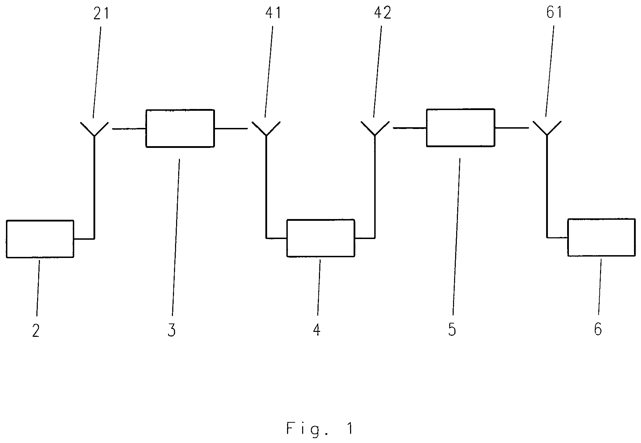

Figure 1 shows a simplified form of the path the COFDM signal follows from exiting the transmitter 2 antenna 21 until it is received by the receiver 6 antenna 61. In many cases, to ensure correct signal reception, it is necessary to use repeaters (or Gap-Fillers) 4 which amplify the signal to the level which guarantees the coverage of areas which would otherwise not be guaranteed adequate reception of the COFDM signal. As can be observed, the signal transmitted from a transmitter 2 transmitting antenna 21 traverses a first multipath channel 3 which links the antenna 21 to a repeater (or Gap-Filler) 4 receiving antenna 41. A second multipath channel 5 is likewise traversed by the signal from when it is transmitted by a repeater 4 transmitting antenna 42 until it is received by a receiver equipment 6 receiving antenna 61.

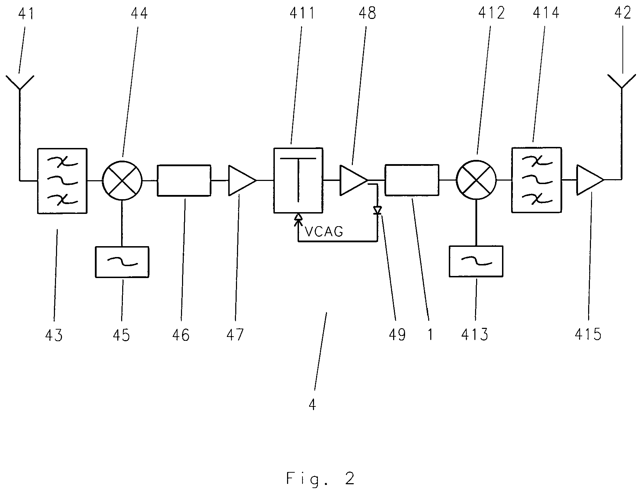

The coupling which unavoidably occurs between the receiving antenna 41 and the transmitting antenna 42, both of repeater 4, as well as the distortions produced in the multipath channel 3 and 5 and the distortions produced by the repeater (or Gap-Filler) 4, negatively affect the signal reception. To correct the signal reception, these distortions are corrected by a flat spectrum signal processing system 1, according to the invention, which is located in the repeater (or Gap- Filler) 4 as can be observed in figure 2.

Figure 2 shows a block diagram of a repeater (or Gap-Filler) 4 with a flat spectrum signal processing system 1 according to the invention. As can be observed, the signal from the antenna 41 is introduced in the channel filter 43 which rejects the input signal frequency image.

The filtered signal is introduced in a mixer 44 where it is mixed with the signal generated by a local oscillator 45. An intermediate frequency signal is produced at the mixer output 44. This signal is introduced in a surface wave filter 46, which eliminates all the undesired mixing produced in the mixer 44.

The intermediate frequency signal is amplified by the IF amplifiers 47 and 48 and detected at the output of the latter by the detector 49. The signal detected is used to generate the automatic gain control voltage V AGC, which acts on the attenuator 411 so that the signal input level of the flat spectrum signal processing system 1 has a constant level for all values of input signal within the dynamic range of the repeater equipment 4.

The output signal of the flat spectrum signal processing system is introduced in a mixer 412, where it is mixed with the local oscillator signal 413, so that the signal at the frequency of the channel which one wants to transmit, is produced at the mixer output 412.

The mixer 412 output signal is made to pass through the channel filter 414 responsible for eliminating all undesired mixing, so that only the signal at the frequency one wants to transmit appears at its output.

The resulting signal is made to pass through the output amplifier 415, responsible for raising the signal level until the correct value to be transmitted by the transmitting antenna 42.

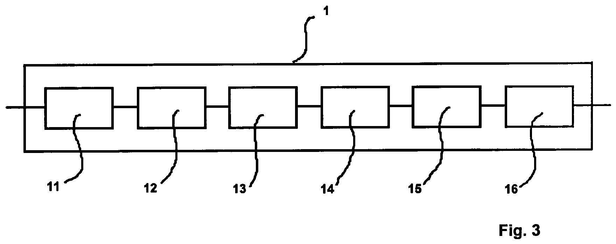

Figure 3 shows a diagram of the flat spectrum signal processing system 1 according to the invention which, as can be observed, is formed from first a filter 11 which selects the input signal frequency band, a first frequency converter 12 which changes the signal frequency (e.g. 36 MHz) to another frequency called intermediate processing frequency (e.g. example 11 MHz), a digital/ analog converter 13 of, for example, 9 bits which converts the analog signal to digital by a sampling rate of, for example, 45.66 million samples per second; the digital samples are processed in a second filter 14, which is digital and 240-coefficient adaptive of which, only one of each three (a3, a6,....a240; 80 in total) are other than zero, an additional coefficient b adjusts the output level. The output of the second adaptive digital filter 14 is reconverted in analog in a digital/ analog converter 15, also 9-bit, receiving samples at a rate of 45.66 million samples per second. Finally, a second frequency converter 16 returns the signal to its original frequency (e.g. 36 Mhz).

The transfer function of the second adaptive digital filter 14 of the flat spectrum signal processing system 1, according to the invention, will have the form.

$$H(z) = \frac{b}{1 + \sum_{k=1}^{N} a_k z^{-k}}$$

which represents the ratio between the second filter 14 output (output (n)) and the second filter 14 input (input (n)) by means of the difference equation.

$$\text{Output } [n] = b * \text{input } [n] - \sum_{k=1}^{N} a_k * \text{output}[n-k]$$

Coefficient b will serve to adjust the gain of the flat spectrum signal processing system 1 and keep its output signal power equal to its input signal power. The other coefficients, a1......,an will serve to eliminate the distortions present in the signal as a consequence of the coupling which will inevitably occur between the receiving antenna 41 and the transmitting antenna 42 of the repeater 4 as well as the distortions produced in the multipath channel 3 and 5 and the distortions produced by the repeater (or Gap-Filler) 4. Given that the signal has a flat spectrum (e.g. COFDM signals) minimizing the power output of the flat spectrum signal processing system 1 is equivalent to flattening the spectrum of said signal, i.e. to eliminate the effects of the multipath 3 and 5 and the repeater 4 coupling.

For the second adaptive digital filter 14 to adjust its coefficients without external intervention, making the system more robust and simpler to handle, a blind adaptive algorithm is necessary, i.e. lacking external references.

The number of N coefficients of the transfer function denominator of the second adaptive digital filter 14 should be sufficient to compensate the multipath channel 3 multipath and the repeater 4 coupling. The multipath delay is the maximum time difference between the different paths the signal follows from the transmitter 2 until the repeater 4 input. The repeater 4 delay is that caused by the filters 43 and 413 thereof, as regards which, the time that the output signal takes to couple back to the receiving antenna 41 can be rejected. Value N multiplied by the sampling period at which the second adaptive digital filter 14 operates should be greater than any of said delays.

The optimum solution for the second filter 14 is its implementation using an unstable filter. So, in the ideal case wherein there is no multipath, if the repeater 4 gain margin is lower than zero, the second optimum filter 14 is unstable.

The dynamic margin in dB (decibels) is defined as:

$$\text{Gain margin} = -10 \log (\text{Feedback power} / \text{Power input})$$

A gain margin expressed in negative decibels indicates that the link formed by the repeater 4, with coupling, acts as an amplifier, which means more power returns to the receiving antenna 41 than enters in the repeater 4.

The cancellation of said coupling forces the second filter 14 to be unstable, which does not mean that it does not function, since the complete link would be stable.

In order to have a computationally simple algorithm which, at the same time, offers good convergence properties for filters with feedback, we have chosen to use the Pseudolinear Regression Approach algorithm.

The coefficient adaptation of the second filter 14 can be represented in a non-limiting manner in the following way.

$$a_k(n+1) = a_k(n) + \mu * s(n) * s(n-k), \quad 1 \le k \le N$$

The N feedback coefficients are adapted through the Pseudolinear Regression Approach algorithm. The signal s(n) is the output of the second filter 14, whose power should be minimized so that the spectrum is as flat as possible. The adaptation concept $\mu$ is a value which affects the speed of convergence and final residual error as regards the optimal solution; its value should be appropriately chosen. In order to maintain the dynamic range of the input to the digital/ analog converter 15, i.e. avoid large variations in the power output of the flat spectrum signal processing system 1, coefficient b thereof is adjusted in the following way

$$b(n) = (1 + \sum^n a_k 2(n+1)) 1/2$$

This ratio guarantees that the power input and output of the flat spectrum signal processing system 1 are equalized once this has converged to its optimal value.

The proposed system functions with the digitized version of the signal which has a flat spectrum (e.g.: COFDM signal), which conditions the sampling rates at which it can be used in converters 12 and 13. To avoid the use of digital filters, apart from the second adaptive digital filter 14, which would complicate the implementation and increase the delay of the repeater 4, a structure is used wherein the coefficient adaptation of the second filter 14 is performed at a rate meaning the digital signal occupies the entire frequency range (- $\pi$, $\pi$), whilst the filtering operation of the second filter 14 is performed at a higher speed so that part of the digital signal spectrum is content-free. Therefore, for the case of a COFDM signal whose bandwidth is 7.61 MHz, the frequency f1 (or intermediate processing frequency) at which said signal would have to be located at the second filter 14 input can be any value from the following array:

$$f1 = KB +/- B/2 , k = 0,1,2,3....$$

The particular case of k = 0 is equivalent to working with the baseband signal or, in other words, to f1= 0. In this case, the signal is complex i.e. it is necessary to use two digital/ analog converters.

As regards the sampling rate fs of converters 13 and 15, any frequency of form fs = 2B.M, with M being a whole number greater than or equal to one, avoids the overlapping of the samples with which said frequency is valid.

Within the array of possible sampling frequencies, the most appropriate are those wherein the resulting digital spectrum is separated from frequencies 0 and $\pi$ to, in this way, facilitate the filtering operations of converters 13 and 15 and avoid necessarily good analog or digital filters. In this way, the equalization is performed at the rate of fs=2B. M samples per second, whilst the adaptation is made at the rate of 2B samples per second, after keeping only one of each M samples of the second filter output 14 for the adaptation operation.

For the particular case wherein the sampling frequency is fs= 6B., the intermediate processing frequency f1 is given by (taking B= 7.61 MHz).

$$f1 = 2B - B/2 = 11,415 \text{ MHz}$$

This is the combination that enables the sampling of the signal in intermediate frequency at the lowest possible rate, and which guarantees the separation of the spectrum at frequencies 0 and $\pi$. The second filter 14 input signal is oversampled so that the resulting digital signal only occupies part of the total digital spectrum. Said signal cannot be processed by the adaptive schema, as it does not occupy the entire band and, even in the case of null distortion, it would not be a flat spectrum signal throughout the discrete frequencies axis, a key premise for the proper functioning of the proposed schema.

Nevertheless, this oversampling avoids the filtering of the sampled signal at the limit, with the associated distortions. For the aforementioned specific case, the adaptive schema functions on the signal at a rate which is three times lower, which means it occupies the entire frequency. The aforementioned difference equation is therefore converted in the following:

$$\text{Output } (n) = b * \text{input} (n) - \sum\nolimits^{n} ak * \text{output} (n-3k)$$

In a practical implementation it may be necessary to slightly reduce the sampling frequency in relation to the aforementioned, in order to avoid possible effects associated with the spectral null at 0 frequency.

The idea of oversampling can also be applied to the baseband signal. Specifically, the possible sampling frequencies would have form fs =MB, M= 2,3..., and the decimated factor to the second filter 14 input would be M. The basic difference stems from the handling of complex values, which means the adaptive algorithm would be given by:

$$a_k(n+1) = a_k(n) + \mu * s^* (n) * s(n-k) , 1 \leq k \geq N$$

Where s*(n) indicates the conjugated complex of s(n).

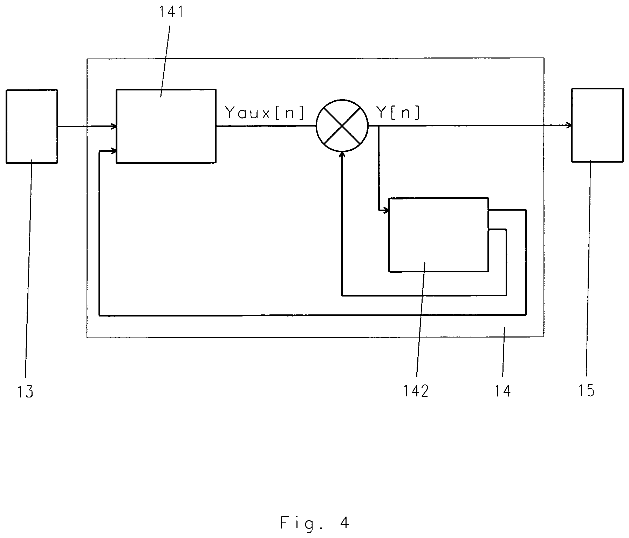

Figure 4 shows a block diagram where we can observe the elements that comprise the second adaptive digital filter 14: a digital filtering element 141 and a coefficient adaptation element 142.

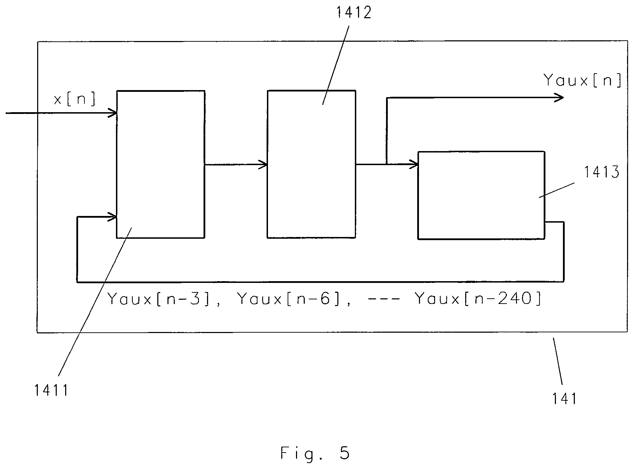

As can be observed in figure 5, the digital filtering element 141 is comprised of a multiplication stage 1411, an addition and accumulation stage 1412 and a delay stage 1413.

The filtering consists of subtracting the sum of each multiplication between the coefficients and the auxiliary output feedback sample from the input value x[n]: a3*yaux[n-3] + a6*yaux[n-6] + ...+ a240*yaux[n-240].

In the multiplication stage 1411, each delayed auxiliary output sample (yaux[n-3], yaux[n-6],..., yaux[n-240]) is multiplied by the corresponding coefficient (a3, a6,..., a240). These operations are performed by using hardware multipliers which take two 9-bit numbers, interpreted as whole numbers with signum in two's complement and generate the 18-bit result, also as a whole number with signum represented in the format of two's complement. To make maximum use of the available hardware, each multiplier makes three products for each input sample.

Multiplexes select one from the three pairs of operands for each multiplier. This fact, together with the use of chained or pipeline records, achieves the spatial and time overlapping of the operations. Thus, 80 multiplications are performed using only 27 multipliers functioning at three times the speed of the input sample rate. Additionally, the input value sign (x[n]) is also changed, multiplying it by -1, whose representation varies, depending on the mode, according to the position of the decimal point used.

In the addition and accumulation stage 1412, the results of the multiplications of the previous stage are added, including the input value x[n] with sign change. The use of pipeline records and the accumulator set to zero permit the total value of the sum to be obtained, bearing in mind the fact that each multiplier has performed 3 operations for each input sample. The previous operations are performed with no precision loss, which means the result is a number represented with 25 bits. Given that a 9-bit value is again necessary for the following stages, a multiplex selects the appropriate bits according to the position of the decimal point and makes the pitch to 9-bit with rounding off. Furthermore, the result sign changes in order to produce the desired value of x[n] minus the sum of the products which form the auxiliary output yaux[n]. of the digital filtering element 141.

The delay stage 1413 of the digital filtering element 141 auxiliary output consists of a record chain, where each record transfers its content to the next one. A simultaneous transfer is made in all the records for each input sample to the filter. The output of one of each three records is accessible producing, from the auxiliary output yaux[n], the delayed auxiliary outputs, multiples of three samples (yaux[n-3], yaux[n-6],..., yaux[n-240]).

These delayed outputs are coupled back in the multiplication stage.

The product of the auxiliary output yaux[n] with coefficient b, converted to a 9-bit result, rounded off, constitutes the final output of the adaptive filter y[n].

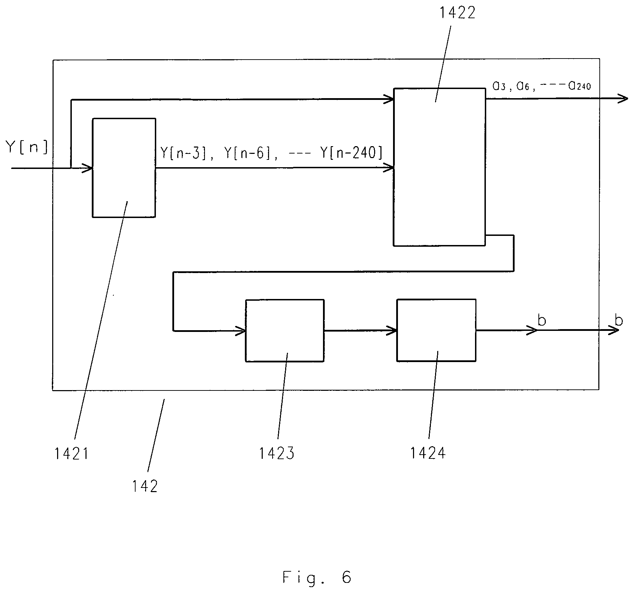

As can be observed in figure 6, the coefficient adaptation element 142 consists of a delay stage 1421, adaptation blocks 1422, an addition stage 1423 and a square root stage 1424.

The coefficient adaptation consists of the calculation of a new array of coefficients a3, a6,..., a240 and b for the filtering, from the current values of said coefficients and the current output samples y[n] and delayed output samples y[n-3], y[n-6],..., y[n-240]. A new value for coefficient ai is calculated by adding the current value of the product y[n] by y[n-i], with i = 3, 6,..., 240, weighed by a constant value called pitchassage, equal for all coefficients. This pitch is a small value and, in this case, a positive value has been adopted, less than the unit and power of 2, for simplicity. The new value of b is calculated as the square root of 1 plus the addition of the new ai coefficients to the square.

The delay stage 1421 consists of a chain of records, where each record transfers its contents to the next for each filter input sample. The output of one of each three records is stored in an additional record which is updated just once for each three filter input samples.

Thus, the delayed output values are produced [n-3], y[n-6],...,y[n-240], from the filter output value y[n], but are updated at a rate three times less that the sampling rate.

Each one of the 20 adaptation blocks 1422 calculates 4 a coefficients and produces a sum to the square to calculate coefficient b. The nucleus of each block is formed from a multiplier. This multiplier is used 8 times for each new array of 4 a coefficients. A multiplex selects the input value y[n] and the value y[n-i] corresponding to the coefficient to be updated. From the result, another multiplex selects the bits appropriate for the position of the decimal point and the pitch of the current model. An adder adds the current value of the coefficient, represented with 18 bits, to the new increase and stores it in an 18-bit record. The new value of the coefficient overwrites the previous value. A mechanism has been provided which prevents the overflowing of the record of each coefficient: if the new result after the addition was too large, that coefficient would not be updated, which would reduce the appearance of instabilities and transients with adverse input sequences.

Internal 18-bit precision is used to adapt the coefficients, which achieves a much more precise adaptation evolution, more concordant with the theoretical model. To apply the filter, the output of the a coefficients is reduced from 18 to 9 bits, with rounding off, and it is also used with 9-bit precision to calculate b, but without rounding off, to accelerate the calculation.

Even though each 18-bit coefficient a is calculated at different points within each adaptation block, the 9-bit results of all coefficients are simultaneously captured in independent records once per each three input samples to the filter.

After each new coefficient a is calculated, the multiplier input multiplexes select that new value obtaining its value to the square. Accumulation records calculate the sum of the four new coefficients to the square.

In the addition stage 1423, the values to the square of the new a coefficients plus the value one are added, represented corresponding to the position of the decimal point.

In this case, pipeline records are not necessary as this operation is only necessary once out of every three 3 input samples and the schema adopted is sufficiently fast to perform the whole operation in a single cycle, without needing to divide it in several cycles.

The square root stage 1424 takes the appropriate 16 bits from the previous stage, from the 25 bits resulting from the sum without losing precision, and calculates the square root, producing 8 effective bits. The ninth bit, the sign bit, always has the same value and is not calculated as the positive result of the root is taken, forming the new value of b. The root is calculated in combination form, in a single cycle, and links to the addition stage without requiring pipeline records, as both operations can be performed in the time between three filter input samples.

Reference list

| | |
|---|---|
| 1 | Flat spectrum signal processing system |
| 11 | First filter |
| 12 | First Frequency converter |
| 13 | Analog /digital converter |
| 14 | Second Adaptive digital filter |
| 141 | Digital filtering element |
| 1411 | Multiplication stage |
| 1412 | Addition and accumulation stage |
| 1413 | Delay stage |
| 142 | Coefficient adaptation element |
| 1421 | Delay stage |
| 1422 | Adaptation blocks |
| 1423 | Addition stage |
| 1424 | Square root stage |
| 15 | Analog/digital converter |
| 16 | Second Frequency converter |
| 2 | Transmitter |
| 21 | Transmitter antenna 2 |
| 3 | Transmitter- Repeater Multipath channel |
| 4 | Repeater (or Gap-Filler) |
| 41 | Repeater Receiving antenna 4 |
| 42 | Repeater Transmitting antenna 4 |
| 43 | Channel filter |
| 44 | Mixer |
| 45 | Local oscillator |
| 46 | Surface wave filter |
| 47 | Amplifier |
| 48 | Amplifier |
| 49 | Detector |
| 411 | Attenuator |
| 412 | Mixer |
| 413 | Oscillator |
| 414 | Channel filter |
| 415 | Output amplifier |
| 5 | Repeater- receiver Multipath channel |

**Claims**

1. Flat spectrum signal processing system comprising a first frequency converter (12), which changes a first signal frequency ($f_2$) to a second frequency ($f_1$), an analog/digital converter (13), which converts an analog signal ($s_a$) to a digital signal ($s_d$),

   - a filter (14), which is digital and adaptive,
   - a second digital/analog converter (15), which converts the digital signal ($s_d$) to an analog signal ($s_a$), and

- a second frequency converter (16), which returns the analog signal ($s_a$) to the first frequency ($f_2$),

**characterized in**

- **that** the filter (14) has a transfer function

$$H(z) = \frac{b}{1 + \sum_{k=1}^{N} a_k z^{-k}}$$

wherein H(z) represents the ratio between the filter (14) output (n) and the filter (14) input (n) by means of the difference equation

$$\text{Output [n]} = b * \text{input [n]} - \sum_{k=1}^{N} a_k * \text{output[n-k]}$$

wherein

$a_k$ are the filter coefficients serving to the elimination of distortions present in the signal;
b is a coefficient designating the adjustment of the gain of the flat spectrum signal processing system (1) and
z is a variable parameter, and

- **that** the filter (14) has coefficients which are adapted according to a pseudolinear regression approach algorithm.

2. Flat spectrum signal processing system (1) according to claim 1 **characterized in that** the filter (14) is implemented with a lattice structure.

3. Flat spectrum signal processing system according to the preceding claims, **characterized in that** only one of the coefficients of the filter (14) is different than zero.

4. Flat spectrum signal processing system according to the preceding claims, **characterized in that** a coefficient adaptation is performed for each sample of an output signal.

5. Telecommunications repeater (4), formed by at least one receiving antenna (41) and one transmitting antenna (42), a channel filter (43), a mixer (44), a local oscillator (45), a surface wave filter (46), IF amplifiers (47, 48), a detector (49), an attenuator (411), a mixer (412), a local oscillator (413), a channel filter (414) and an output amplifier (415), **characterized in that** it comprises a flat spectrum signal processing system (1) as defined in the preceding claims.

**Patentansprüche**

1. Signalverarbeitungssystem für ein flaches Spektrum, das aufweist einen ersten Frequenzwandler (12), der eine erste Frequenz ($f_2$) in eine zweite Frequenz ($f_1$) ändert, einen Analog/Digital-Wandler (13), der ein Analog-signal ($s_a$) in ein Digitalsignal ($s_d$) wandelt,

- ein Filter (14), das digital und adaptiv ist,
- einen zweiten Digital/Analog-Wandler (15), der das Digitalsignal ($s_d$) in ein Analog-Signal ($s_a$) wandelt, und
- einen zweiten Frequenzkonverter (16), der das Analogsignal ($s_a$) zu der ersten Frequenz ($f_2$) zurückführt,

**dadurch gekennzeichnet,**

- **dass** das Filter (14) eine Transferfunktion

$$H(z) = \frac{b}{1 + \sum_{k=1}^{N} a_k z^{-k}}$$

hat, wobei H(z) das Verhältnis zwischen Ausgängen (output n) des Filters (14) und Eingängen (input n) des Filters (14) mittels der Differenzgleichung

$$\text{Output } [n] = b * \text{input } [n] - \sum_{k=1}^{N} a_k * \text{output}[n-k]$$

bezeichnet wobei

$a_k$ Filterkoeffizienten sind, die der Eliminierung von Störungen dienen, die in dem Signal vorhanden sind;
b ein Koeffizient ist, der die Anpassung des Gewinns des Signalverarbeitungssystems (1) für ein flaches Spektrum bezeichnet,
z ein variabler Parameter ist, und

- **dass** das Filter (14) Koeffizienten hat, die gemäß einem pseudolinearen Regressionsansatz-Algorithmus angepasst sind.

2. Signalverarbeitungssystem (1) für ein flaches Spektrum nach Anspruch 1, **dadurch gekennzeichnet, dass** das Filter (14) in einer Gitterstruktur implementiert ist.

3. Signalverarbeitungssystem für ein flaches Spektrum nach einem der vorstehenden Ansprüche, **dadurch gekennzeichnet, dass** nur einer der Koeffizienten des Filters (14) ungleich Null ist.

4. Signalverarbeitungssystem nach einem der vorstehenden Ansprüche, **dadurch gekennzeichnet, dass** eine Koeffizienten-Anpassung für jedes Muster eines Ausgangssignals durchgeführt wird.

5. Telekommunikations-Wiederholungsvorrichtung (4), gebildet aus wenigstens einer Empfangsantenne (41) und einer Sendeantenne (42), einem Kanalfilter (43), einem Mixer (44), einem lokalen Oszillator (45), einem Oberflächenwellenfilter (46), IF-Verstärkern (47, 48), einem Detektor (49), einem Dämpfungsglied (411), einem Mixer (412), einem lokalen Oszillator (413), einem Kanalfilter (414) und einem Ausgangsverstärker (415), **dadurch gekennzeichnet, dass** sie ein Signalverarbeitungssystem (1) für ein flaches Spektrum aufweist wie in den vorstehenden Ansprüchen definiert.

## Revendications

1. Système de traitement de signaux à spectre plat, comprenant un premier convertisseur de fréquence (12) qui convertit une première fréquence de signal ($f_2$) en une seconde fréquence ($f_1$), un convertisseur analogique-numérique (13) qui convertit un signal analogique ($s_a$) en un signal numérique ($s_d$),

- un filtre (14) qui est numérique et adaptatif,
- un second convertisseur numérique-analogique (15) qui convertit le signal numérique ($s_d$) en un signal analogique ($s_a$), et
- un second convertisseur de fréquence (16) qui fait repasser le signal analogique ($s_a$) à la première fréquence ($f_2$),

**caractérisé en ce que** :

- le filtre (14) a une fonction de transfert

$$H(z) = \frac{b}{1 + \sum_{k=1}^{N} a_k z^{-k}}$$

où H(z) représente le rapport entre la sortie (n) du filtre (14) et l'entrée (n) du filtre (14) au moyen de l'équation aux différences :

$$Sortie\,[n] = b * entrée\,[n] - \sum_{k=1}^{N} a_k * sortie\,[n-k]$$

où

$a_k$ sont les coefficients de filtre servant à l'élimination de distorsions présentes dans le signal ;
b est un coefficient désignant l'ajustement du gain du système de traitement de signaux à spectre plat (1), et
z est un paramètre variable, et

- que le filtre (14) a des coefficients qui sont adaptés en fonction d'un algorithme d'approximation par régression pseudo-linéaire.

2. Système de traitement de signaux à spectre plat (1) selon la revendication 1, **caractérisé en ce que** le filtre (14) est mis en oeuvre selon une structure en treillis.

3. Système de traitement de signaux à spectre plat selon les revendications précédentes, **caractérisé en ce qu'**un seul des coefficients du filtre (14) est différent de zéro.

4. Système de traitement de signaux à spectre plat selon les revendications précédentes, **caractérisé en ce qu'**une adaptation de coefficient est réalisée pour chaque échantillon de signal de sortie.

5. Répéteur de télécommunications (4) constitué d'au moins une antenne de réception (41) et une antenne d'émission (42), un filtre de voie (43), un mélangeur (44), un oscillateur local (45), un filtre à ondes de surface (46), des amplificateurs FI (47, 48), un détecteur (49), un atténuateur (411), un mélangeur (412), un oscillateur local (413), un filtre de voie (414) et un amplificateur de sortie (415), **caractérisé en ce qu'**il comprend un système de traitement de signaux à spectre plat (1) tel que défini dans les revendications précédentes.

21    41    42    61

2    3    4    5    6

Fig. 1

Fig. 2

**Fig. 3**

141

Yaux[n]

Y[n]

13

142    14    15

Fig. 4

Fig. 5

Y[n]

1422

a₃, a₆, --- a₂₄₀

Y[n-3], Y[n-6], --- Y[n-240]

b    b

1421

142

1423

1424

Fig. 6

# EP 1 555 769 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0772310 A
- ES 216008
- DE 10155179 A1
- JP 2002330112 A
- JP 2000031877 A